## Europäisches Patentamt
## European Patent Office
## Office européen des brevets

(19)

(11) Publication number: **0 147 670**
**B1**

(12) **EUROPEAN PATENT SPECIFICATION**

(45) Date of publication of patent specification: **04.10.89**

(51) Int. Cl.⁴: **A 01 F 29/00, A 01 D 87/12**

(21) Application number: **84114623.6**

(22) Date of filing: **01.12.84**

(54) **An agricultural machine for loading, transporting, chopping, and dispensing to the fodder box fodder picked up in roll bales.**

(30) Priority: **09.12.83 IT 1812983**

(43) Date of publication of application:
**10.07.85 Bulletin 85/28**

(45) Publication of the grant of the patent:
**04.10.89 Bulletin 89/40**

(84) Designated Contracting States:
**DE FR IT**

(56) References cited:
**EP-A-0 086 478**
**DE-C- 496 588**
**FR-A-2 271 868**
**GB-A-2 048 211**
**US-A-3 920 190**

(73) Proprietor: **Gemelli, Bruno**
**Via Cantalupa 16**
**I-46010 Curtatone Fraz S. Silvestro (Mantova)**
**(IT)**

(72) Inventor: **Gemelli, Bruno**
**Via Cantalupa 16**
**I-46010 Curtatone Fraz S. Silvestro (Mantova)**
**(IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

This invention relates to an agricultural machine for loading, transporting, chopping, and dispensing to the fodder box fodder picked up in roll bale form.

Known are machines for crumbling fodder as picked up in roll bale form, which generally comprise fast-moving rotating blades adapted to interfere with circumferential areas of the fodder bales to perform a chopping action to allow a quick and even distribution of the fodder into fodder boxes.

Also known are machines which unroll a bale, and require manual operation by an operator who provides for directly metering and distributing the fodder into the fodder boxes.

GB—A—2048211 discloses an apparatus for unrolling, discharging and distributing cylindrical bales of hay that eliminate the need for non-handling the bales. The apparatus comprises a device that strips material from the surface of a rotating bale.

Quite often, cutter bars are used for cutting the bales, such as are normally employed in agriculture for mowing applications, which allow a bale to be first cut down into pieces, it being left for the operator to provide for further crumbling.

The crumbling operation performed by such machines is not, however, devoid of drawbacks; in fact, crumbling, in the instance of rotary blade machines, results unavoidably in the fodder quality being degraded and, quite often, becoming untolerable for the beasts.

Where the operation is performed by means of cutter bars, or by machines which can only unroll a fodder bale, direct action by the operator is of primary importance and results in the operation being slowed down, and the cost for the operation being raised.

Furthermore, and especially where rotary blade machines are used, unhealthy working conditions are created because crumbling of the generaly dry fodder releases a large amount of dust.

It is a primary object of this invention to provide a machine which enables apportioning of fodder in roll bales, and dispensing the resulting pieces into the fodder box without requiring any direct action by the operator.

Another object of the invention is to provide a machine which can cause no crumbling of fodder, thus retaining its quality unaltered and preventing the production of dust.

These and other object are achieved by an agricultural machine as claimed in claim 1.

Further features and advantages of the invention will be apparent from the following description of a preferred, but not exclusive, embodiment of the machine according to this invention, as illustrated, by way of example and not of limitation, in the accompanyng drawings, where:

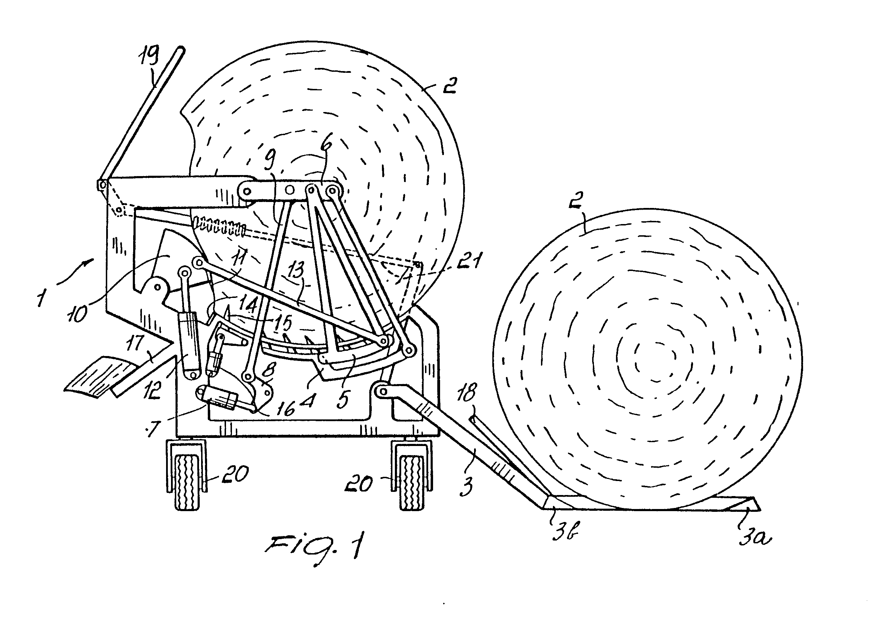

Figure 1 is a front elevation view of the machine of this invention, at two operational phases thereof;

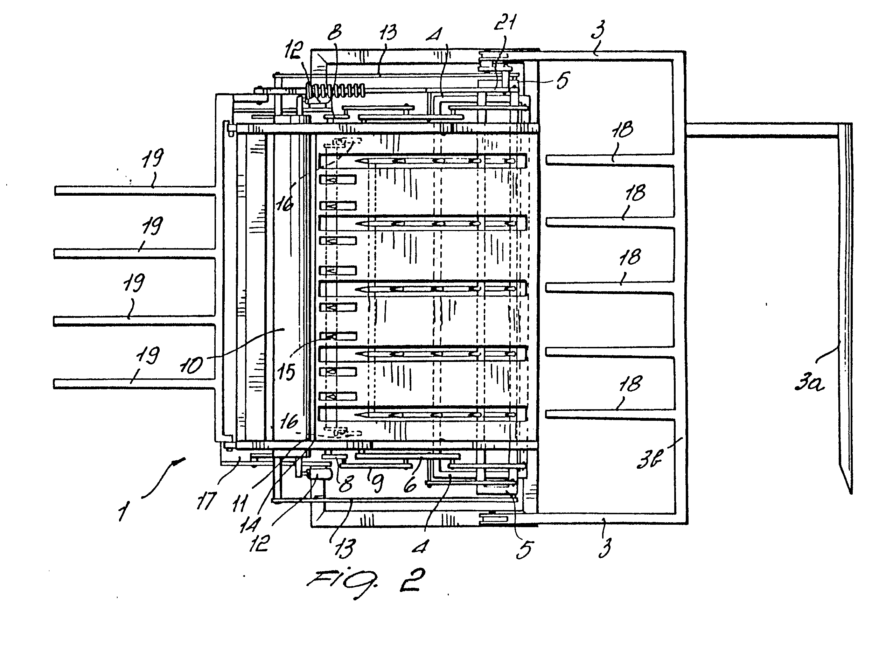

Figure 2 is a top plan view of the machine of this invention, in the inoperative position thereof.

With reference to the cited figures, a machine according to the invention comprises a moving support frame, generally designated with the reference numeral 1, having casters 20, wherewith the various mechanisms for chopping a fodder bale 2 placed on the frame are associated.

Hingedly connected to the frame 1 is a fork 3 forming the means of picking up the bale 2 from the ground surface, which form can be swung about a substantially parallel axis to the axis of the fodder bale so as to lift it off the ground and load it onto the moving frame 1.

The fork 3 has two prongs 3a which extend along two parallel axes to the oscillation axis of the fork so that they can be driven into the bale sides close to the ground surface with a parallel motion to the bale axis.

The machine includes a feeding means effective to impart to the bale 2 a movement of intermittent rotation about its own axis, which comprises at least one tooth holder frame 4 which cyclically engages with and disengages from a circumferential portion of the fodder bale surface.

In the embodiment shown in the figures, two tooth holder frames 4 and 5, respectively, are provided which are pivotally connected to each other about a substantially parallel axis to the axis of a bale placed on the moving frame.

The two holder frames are individually pivoted to a pair of deflectors 6, in turn pivoted to the moving structure. The deflector pair are swingable about a parallel axis to the axis of the fodder bales and the movement is provided by a first hydraulic cylinder 7, or pair of hydraulic cylinders, which act on the deflectors with the interposition of a conventional linkage indicated at 8 and 9. Oscillation of the deflectors causes the tooth holder frames to be engaged with and disengaged from the fodder bale.

Hingedly connected to the moving frame 1 is a blade holder 10 therewith a blade 11 is associated which extends along a substantially parallel axis to the axis of the fodder bales.

The blade holder segment, and hence the blade, which constitutes the chopping means according to the invention, are swingingly movable about a substantially parallel axis to the axis of the fodder bales and actuated by at least a second hydraulic cylinder 12 which is carried on the moving frame.

The blade 11, moreover, is connected to the first and second tooth holder frames which, as mentioned, are hinged together along a substantially parallel axis to the axis of the fodder bale, by a tie member 13 which has one end pivotally connected to the blade holder segment and the other end pivoted to the second tooth holder means.

The blade may be constructed in several pieces to avoid replacement of the whole blade in the event that it is damaged.

To facilitate the chopping operation, an anvil blade 14 is provided which extends parallel to the blade and is rigidly associated with the moving frame.

The machine further includes a means of locking the fodder bale during the chopping operation, which comprises essentially an array of teeth 15 which extend parallel to the axis of the fodder bale and are movable in a radial direction to the bale to engage with and disengage from it on actuation of a third hydraulic cylinder 16 associated at one end with the moving frame.

The moving frame is further provided laterally with a chute 17 which opens in the vicinity of the blade and anvil blade for discharging chopped fodder portions into the fodder box.

Since, as fodder is being removed the bale loses weight, hindering the actions of the feeding means and locking means, a holding means is provided which comprises a first comb 18, rigidly associated with the fork, which extends along a substantially parallel direction to the axis of the fodder bale and is positioned such that on the fork being swung upwardly, it urges the fodder bale against the blade.

In addition to the first comb 18, a second comb 19 is provided which is hingedly connected to the moving frame for oscillation about a parallel axis to the axis of the fodder bale and is connected to the fork by a telescope tie member 21. Thus, as the fork is tilted over the fodder bale to operate the first comb, the second comb will simultaneously act on the fodder bale to compress it onto the moving frame, thus enabling engagement of the tooth holder frames and tooth array, which would otherwise lift the bale.

The machine so conceived may be provided with an independent tractor means or be customarily towed behind a tractor which will also power the hydraulic cylinders.

The operation of the invention will be apparent from the foregoing description.

The machine is taken to a location close to a fodder bale to be loaded, and with the fork in its lowered position, the two prongs are driven in laterally from opposed sides to the bale area of rest on the ground, thus hooking up the bale. By operating the fork, the bale is lifted and placed onto the moving frame; at this point, the fodder begins to be chopped by oscillation of the blade which will remove a first fodder portion from a circumferential area of the fodder bale.

While the blade is cutting through, the tooth array is engaged with the fodder bale to lock it, while the first and second tooth holder frames are disengaged from the fodder bale by the action of the downward oscillation of the deflector pair 6. The chopped off portion will drop onto the chute and whence into the fodder box because the machine moves forward parallely to the fodder box, in operation. On the blade completing the removal, the deflector pair are swung upwards such that the tooth holder frames are engaged with the fodder bale. The blade return movement oscillates the tooth holder frames by means of the tie member 13 to cause the bale to move forward about its own axis after the tooth array have been disengaged.

Thus, the blade will continue chopping off circumferential portions from the fodder bale which decreases in diameter and hence in weight. Owing to this fact, after a certain period it would be no more possible either to chop off or move forward the fodder bale because the outward movement of both the teeth of the locking means and feeding means would cause the bale to be lifted off the moving frame.

To obviate this the fork is operated which is tilted over the fodder bale (or rather, over what is left over of the original fodder bale) taking the first and second combs to press on the fodder bale and enabling the chopping operation to be continued until the bale is fully exhausted.

It has been ascertained in practice that the machine according to the invention fully achieves its objects and fodder apportioning with a clean cut, fully automating all of the operations and thus expediting them.

Thus, the fodder quality is kept unaltered while preventing the production of dust.

The invention so conceived is susceptible to many modifications and changes without departing from the purview of the inventive concept. Thus, as an example, the actuation of the cutting means, feeding means, pick-up means, positioning means, and locking means could also be accomplished through linkages of some different types; furthermore, all of the details may be replaced with other technically equivalent ones within the scope of the claims.

In practicing the invention, any materials as well as the dimensions may be used according to requirements and the state of the art.

**Claims**

1. Agricultural machine for loading, transporting, chopping, removing and dispensing to the fodder box, fodder picked up in roll bales, comprising: a movable support frame (1) having associated therewith a means (3) for picking up from the ground a fodder bale (2), means (18, 19) for holding said bale in position on said moving frame, a feeding means (45) for turning said fodder bale about the axis thereof, a chute means (17) for dispensing said fodder, characterized in that the feeding means (4, 5) turns said fodder bale intermittently about its axis, said means for removing fodder from the circumferential area of said bale comprising chopper means (11) adapted to be oscillated about an axis parallel to said fodder bale axis when positioned on said moving frame (1) for sequentially removing fodder portions from the circumferential area of said fodder bale (2), said chopper means (11) being connected to said feeding means (4, 5) to synchronize said intermittent rotation of the bale and the movement of said chopper means, a means (15) being provided to hold said fodder bale securely during the chopping operation.

2. A machine according to Claim 1, characterized in that said chopper means comprises a blade (11) extending along a substantially parallel axis to the axis of said fodder bale (2) positioned on said moving frame (1).

3. A machine according to Claim 1, characterized in that it comprises an anvil blade (14) extending parallel to said blade (11) and being rigidly connected to said moving frame (1).

4. A machine according to Claim 1, characterized in that said pick-up means comprises a fork (3) pivotally connected to said moving structure (1) and being oscillable about a substantially parallel axis to the axis of said fodder bale (2) positioned on said moving frame (1).

5. A machine according to Claim 1, characterized in that said feeding means for intermittently turning said fodder bale comprises a tooth holder frame (4) cyclically engaging with and disengaging from a circumferential portion of the surface of said fodder bale.

6. A machine according to Claim 1, characterized in that said feeding means for intermittently turning said fodder bale comprises two tooth holder frames (4, 5) hingedly connected to each other along a substantially parallel axis to the axis of said fodder bale (2) positioned on said moving frame (1), said tooth holder frames cyclically engaging with and disengaging from a circumferential portion of said fodder bale (2).

7. A machine according to one or more of the preceding claims, characterized in that said tooth holder frames (4, 5) may be oscillated about a substantially parallel axis to the axis of said fodder bale (2) positioned on said moving frame (1).

8. A machine according to one or more of the preceding claims, characterized in that said tooth holding frames (4, 5) are connected to said blade (11) through a tie member (13) having one end pivotally connected to a blade holder (10) rigidly connected to said blade (11) and its other end pivotally connected to either of said tooth holder frames (4, 5).

9. A machine according to one or more of the preceding claims, characterized in that said securing means comprises a tooth array (15) extending parallel to the axis of said fodder bale (2) and movable in a radial direction to said fodder bale and engaging therewith during the chopping operation.

10. A machine according to one or more of the preceding claims, characterized in that said holding means comprises a first comb (18) associated with said fork for moving said fodder bale (2) closer to said blade (11).

11. A machine according to one or more of the preceding claims, characterized in that said holding means comprises a second comb (19), oscillably movable about a parallel axis to the axis of said fodder bale (2) and driven by the oscillation of said fork (3), for compressing said fodder bale onto said tooth holder frames (4, 5).

12. A machine according to one or more of the preceding claims, characterized in that said moving frame is associable with a tractor.

## Patentansprüche

1. Landwirtschaftliche Maschine zum Laden, Transportieren, Häckseln, Abnehmen und Abgeben in die Futterbox von Futterrundballen, mit einem verfahrbaren Haltegestell (1), dem eine Einrichtung (3) zur Aufnahme eines Futterballens (2) von Boden zugeordnet ist, einer Einrichtung (18, 19) zum Halten des genannten Ballens in seiner Lage auf dem verfahrbaren Gestell, einer Vorschubeinrichtung (4, 5) zum Drehen des Futterballens um seine Achse, und einer Rutsche (17) zur Abgabe des Futters, dadurch gekennzeichnet, daß die Vorschubeinrichtung (4, 5) den Futterballen intermittierend um seine Achse dreht, die Einrichtun zum Abnehmen des Futters von der Umfangsfläche des Ballens aus einer Häckseleinrichtung (11) besteht, welche befähigt ist, um eine Achse parallel zur Achse des auf dem verfahrbaren Gestell (1) angeordneten Futterballens zu schwingen, um aufeinanderfolgend Futterteile von der Umfangsfläche des Futterballens (2) abzunehmen, wobei die Häckseleinrichtung (11) mit der Vorschubeinrichtung (4, 5) verbunden ist, um die intermittierende Drehung des Ballens und die Bewegung der Häckseleinrichtung zu synchronisieren und wobei eine Einrichtung (15) vorgesehen ist, um den Futterballen während des Häckselns sicher zu halten.

2. Maschine nach Anspruch 1, dadurch gekennzeichnet, daß die Häckseleinrichtung aus einer Klinge (11) besteht, die sich entlang einer Achse erstreckt, die im wesentlichen parallel zur Achse des auf dem verfahrbaren Gestell (1) angeordneten Futterballens (2) verläuft.

3. Maschine nach Anspruch 1, dadurch gekennzeichnet, daß sie eine Gegenschiene (14) aufweist, die sich parallel zur genannten Klinge (11) erstreckt und starr mit dem verfahrbaren Gestell (1) verbunden ist.

4. Maschine nach Anspruch 1, dadurch gekennzeichnet, daß die Anfnahmeeinrichtung aus einer Gabel (3) besteht, die schwenkbar mit der verfahrbaren Konstruktion (1) verbunden und um eine Achse schwenkbar ist, die im wesentlichen parallel zur Achse des auf dem verfahrbaren Gestell (1) angeordneten Futterballens (2) verläuft.

5. Maschine nach Anspruch 1, dadurch gekennzeichnet, daß die Vorschubeinrichtung zum intermittierenden Drehen des Futterballens aus einem Stützzahnrahmen (4) besteht, der zylkisch in Eingriff und außer Eingriff mit einem Umfangsabschnitt der Oberfläche des Futterballens gelangt.

6. Maschine nach Anspruch 1, dadurch gekennzeichnet, daß die Vorschubeinrichtung zum intermittierenden Drehen des Futterballens aus zwei Stützzahnrahmen (4, 5) besteht, die scharnierartig miteinander entlang eine Achse verbunden sind, die im wesentlichen parallel zur Achse des auf dem verfahrbaren Gestell (1) angeordneten Futterballens (2) verläuft, wobei diese Stützzahnrahmen zylkisch in Eingriff und außer Eingriff mit einem Umfangsabschnitt der Oberfläche des Futterballens (2) gelangen.

7. Maschine nach einem oder mehreren der vorhergehenden Ansprüche, dadurch gekennzeichnet, daß die Stützzahnrahmen (4, 5) um eine Achse schwenkbar sind, die im wesentlichen parallel zur Achse des auf dem verfahrbaren Gestell (1) angeordneten Futterballens (2) verläuft.

8. Maschine nach einem oder mehreren der vorhergehenden Ansprüche, dadurch gekennzeichnet, daß die Stützzahnrahmen (4, 5) mit der Klinge (11) über ein Verbindungsglied (13) verbunden sind, von welchem ein Ende gelenkig mit einem fest mit der Klinge (11) verbundenen Klingenhalter (10) und das andere Ende gelenkig mit den Stützzahnrahmen (4, 5) verbunden ist.

9. Maschine nach einem oder mehreren der vorhergehenden Ansprüche, dadurch gekennzeichnet, daß die Einrichtung zur sicheren Halterung aus einer Zahnreihe (15) besteht, welche sich parallel zur Achse des Futerballens (2) erstreckt und in einer radialen Richtung zum Futterballen (2) bewegbar ist und an diesen während des Häckselvorganges angreift.

10. Maschine nach einem oder mehreren der vorhergehenden Ansprüche, dadurch gekennzeichnet, daß die Halteeinrichtung einen ersten Rechen (18) aufweist, welcher der Gabel zugeordnet ist, um den Futterballen (2) näher zur Klinge (11) hinzubewegen.

11. Maschine nach einem oder mehreren der vorhergehenden Ansprüche, dadurch gekennzeichnet, daß die Halteeinrichtung einen zweiten Rechen (19) aufweist, der schwenkbar um eine parallel zur Achse des Futterballens (2) verlaufenden Achse bewegbar und durch die Schwenkung des Rechens (3) angetrieben wird, um den Futterballen auf die Stützzahnrahmen (4, 5) zu pressen.

12. Maschine nach einem oder mehreren der vorhergehenden Ansprüche, dadurch gekennzeichnet, daß das verfahrbare Gestell einem Traktor zugeordnet werden kann.

**Revendications**

1. Machine agricole pour charger, transporter, hacher, retirer des balles de fourrage, et les distribuer dans une auge, comprenant: un châssis de support mobile (1) auquel sont associés des moyens (3) pour saisir du sol une balle de fourrage (2), des moyens (18, 19) pour maintenir ladite balle en position sur ledit châssis mobile, des moyens de déplacement (4, 5) pour faire tourner ladite balle de fourrage autour de son axe, une glissière (17) pour distribuer ledit fourrage, caractérisée en ce que les moyens de déplacement (4, 5) font tourner, de façon intermittente, ladite balle de fourrage autour de son axe, lesdits moyens pour retirer du fourrage de la zone circonférentielle de ladite balle comprenant des moyens de hachage (11) adaptés pour osciller autour d'un axe parallèle audit axe de la balle de fourrage en position sur ledit châssis mobile (1) pour retirer, de façon séquentielle, des portions de fourrage de la zone circonférentielle de ladite balle de fourrage (2), lesdits moyens de hachage (11) étant reliés auxdits moyens de déplacement (4, 5) pour synchroniser ladite rotation intermittente de la balle de la mouvement desdits moyens de hachage, des moyens (15) étant prévus pour maintenir fermement ladite balle de fourrage pendant l'opération de hachage.

2. Machine selon la revendication 1, caractérisée en ce que lesdits moyens de hachage comprennent une lame (11) s'étendant le long d'un axe sensiblement parallèle à l'axe de ladite balle de fourrage (2) placée sur ledit châssis mobile (1).

3. Machine selon la revendication 1, caractérisée en ce qu'elle comprend une contre-lame (14) s'étendant parallèlement à ladite lame (11) et étant rigidement reliée audit châssis mobile (1).

4. Machine selon la revendication 1, caractérisé en ce que les moyens de saisie comprennent une fourche (3) reliée, de façon pivotante, à ladite structure mobile (1) et pouvant osciller autour d'un axe sensiblement parallèle à l'axe de ladite balle de fourrage (2) placée sur ledit châssis mobile (1).

5. Machine selon la revendication 1, caractérisée en ce que lesdits moyens de déplacement pour faire tourner, de façon intermittente, ladite balle de fourrage comprennent un support de dents (4) s'engageant avec une partie circonférientielle de la surface de ladite balle de fourrage et s'en désengageant de façon cyclique.

6. Machine selon la revendication 1, caractérisé en ce que lesdits moyens de déplacement pour faire tourner, de façon intermittente, ladite balle de fourrage comprennent deux supports de dents (4, 5) articulés l'un à l'autre le long d'un axe sensiblement parallèle à l'axe de ladite balle de fourrage (2) placée sur ledit châssis mobile (1), lesdits supports de dents s'engageant avec une partie circonférentielle de ladite balle de fourrage et s'en désengageant de façon cyclique.

7. Machine selon une ou plusieurs de revendications précédentes, caractérisée en ce que lesdits supports de dents (4, 5) peuvent osciller autour d'un axe sensiblement parallèle à l'axe de ladite balle de fourrage (2) placée sur ledit châssis mobile (1).

8. Machine selon une ou plusieurs de revendications précédentes, caractérisé en ce que lesdits supports de dents (4, 5) sont reliés à ladite lame (11) par un tirant (13) dont une extrémité est reliée, de façon pivotante, à un support de lame (10) relié rigidement à ladite lame (11), et l'autre extrémité est reliée, de façon pivotante, à l'un ou l'autre des supports de dents (4, 5).

9. Machine selon une ou plusieurs des revendications précédentes, caractérisée en ce que lesdits moyens de fixation comprennent une rangée de dents (15) s'étendant parallèlement à l'axe de ladite balle de fourrage (2) et mobile dans une direction radiale à ladite balle de fourrage et s'engageant avec celle-ci pendant l'opération de hachage.

10. Machine selon une ou plusieurs des revendications précédentes, caractérisée en ce que lesdits moyens de maintien comprennent un premier peigne (18) associé à ladite fourche pour déplacer ladite balle de fourrage (2) vers ladite lame (11).

11. Machine selon une ou plusieurs des revendications précédentes, caractérisée en ce que lesdits moyens de maintien comprennent un second peigne (19), pouvant osciller autour d'un axe parallèle à l'axe de ladite balle de fourrage (2) et entraîne par l'oscillation de ladite fourche (3), pour comprimer ladite balle de fourrage sur lesdits supports de dents (4, 5).

12. Machine selon une ou plusieurs des revendications précédentes, caractérisée en ce que ledit châssis mobile peut être associé à un tracteur.

Fig. 1

1

Fig. 2